# DEMANDE DE BREVET EUROPEEN

(11) **EP 4 477 449 A1**
(43) Date de publication de la demande: **18.12.2024**
(21) Numéro de dépôt: 24181001.9
(22) Date de dépôt: 10.06.2024
(51) Int. Cl.: B60L 3/00, B60L 50/20, B60L 50/64, B60L 50/60, B62D 25/10, B62D 25/12, B62K 3/02, B62K 19/30, B62M 6/90, H01M 50/249, H01M 50/271, B62J 43/23, B62J 43/13, B62J 43/28

(54) **VÉHICULE À CAPOT DE PROTECTION D'UNITÉ D'ALIMENTATION ÉLECTRIQUE AMOVIBLE**

(30) Priorité: 16.06.2023 FR 2306233
(71) Demandeur: G. Cartier Technologies, 74302 Cluses (FR)
(72) Inventeur: BOISIER, Pierre, 74130 BRIZON (FR); BREHERET, Jean-Luc, 74300 CHATILLON SUR CLUSES (FR)
(74) Mandataire: Cabinet Poncet

(57) **Abrégé**

Dans un véhicule ayant un compartiment de réception (3) à ouverture (4) pour recevoir et contenir une unité d'alimentation électrique amovible, et un capot (5) pour obturer l'ouverture, articulé selon une charnière (6) comportant une partie fixe de charnière (9) solidaire du véhicule et une partie mobile de charnière (10) montée rotative autour d'un axe (9a) de la partie fixe de charnière, on prévoit :
- un bras de charnière (12), solidaire de la partie mobile de charnière,
- une rainure longitudinale (13) sur une face interne du capot pour recevoir ledit bras de charnière,
- une butée distale (15) escamotable, pour prendre sélectivement un état de retenue dans lequel elle retient dans ladite rainure longitudinale une seconde extrémité (12b) du bras de charnière, et un état de libération dans lequel elle libère la seconde extrémité du bras de charnière vis-à-vis de la rainure longitudinale lorsqu'au moins une sollicitation mécanique forçant le capot à l'écart de la partie mobile de charnière est supérieure à un seuil de déclenchement prédéterminé,
- une butée proximale (14), pour retenir la première extrémité (12a) du bras de charnière dans ladite rainure longitudinale lorsque la butée distale est en état de retenue, et pour s'opposer à l'écartement du capot vis-à-vis de la partie mobile de charnière au-delà d'une course d'écartement prédéterminée et pour autoriser une oscillation limitée du capot vis-à-vis de la partie mobile de charnière, lorsque la butée distale est en état de libération.

## Description

### DOMAINE TECHNIQUE DE L'INVENTION

La présente invention concerne le domaine de l'alimentation électrique embarquée pour véhicules, notamment pour véhicules légers à assistance électrique tels que des bicyclettes, des trottinettes, des tricycles,...

Dans ce domaine, la source d'énergie électrique pour alimenter le moteur d'assistance électrique est une unité d'alimentation électrique embarquée sur le châssis du véhicule et comprenant une batterie d'accumulateurs électriques. La recharge de la batterie d'accumulateurs électriques est généralement assurée par un chargeur conformé pour transformer le courant alternatif d'entrée à 220 V d'une source extérieure d'énergie électrique en courant alternatif à plus faible tension qui est ensuite redressé pour fournir un courant continu de recharge de la batterie d'accumulateurs.

Le chargeur peut être embarqué, fixé et connecté en permanence à la batterie d'accumulateurs électriques, en étant connectable à volonté à ladite source extérieure d'énergie électrique. En alternative, le chargeur est soit fixe et connecté en permanence à la source extérieure d'énergie électrique, soit connectable à volonté à la batterie d'accumulateurs électriques et à ladite source extérieure d'énergie électrique.

La recharge de la batterie d'accumulateurs électriques se fait normalement lorsque l'unité d'alimentation électrique est extraite du véhicule, généralement pour être transportée dans un local surveillé où se trouve une connexion d'accès à la source extérieure d'énergie électrique.

En fonctionnement normal pour alimenter un moteur électrique d'assistance sur un véhicule, l'unité d'alimentation électrique embarquée est logée dans un compartiment de réception prévu à cet effet sur le véhicule et conformé à la fois pour solidariser l'unité d'alimentation électrique au véhicule et pour la protéger contre les agressions extérieures telles que les chocs et le ruissellement de la pluie.

Pour assurer ces fonctions tout en facilitant l'introduction et le retrait de l'unité d'alimentation électrique, le compartiment de réception est habituellement adapté pour couvrir de façon permanente cinq faces de l'unité d'alimentation électrique, avec une ouverture correspondant à la sixième face de l'unité d'alimentation électrique et obturable par un capot escamotable.

Dans l'application au vélo électrique, on a déjà proposé un capot amovible, non solidaire de l'unité d'alimentation électrique, et venant s'adapter sur l'ouverture du compartiment de réception pour l'obturer. Un inconvénient majeur de cette solution est le risque de perdre le capot lors d'un choc ou d'un mauvais engagement sur l'ouverture, ou le risque d'oublier le capot en fin de recharge. Un autre inconvénient est que le retrait ou l'adaptation du capot complique la manoeuvre pour remettre ou extraire l'unité d'alimentation électrique, car il faut une main pour tenir le capot ou le poser sur le sol avant de sortir une clé de verrouillage, l'autre main étant occupée pour saisir l'unité d'alimentation.

En alternative, comme illustré dans le document WO 2021/133919 A1 (mode de réalisation des figures 7A-E), on a déjà proposé un capot formé par l'unité d'alimentation électrique elle-même, ou solidarisé en permanence avec celle-ci, l'ensemble étant fixé de façon amovible sur la partie mobile d'une charnière prévue sur un bord du compartiment de réception. Un inconvénient de cette solution est alors l'absence de fermeture du compartiment de réception pendant que l'unité d'alimentation électrique est retirée de la charnière pour la recharge, pouvant inciter à des actes de malveillance, et pouvant autoriser des introductions d'eau dans la connectique. Un autre inconvénient de cette solution est que cela complique la forme de l'unité d'alimentation électrique.

De façon beaucoup plus confidentielle, on a déjà proposé un capot indépendant de l'unité d'alimentation électrique, et solidarisé lui-même en permanence sur le vélo par une charnière. De la sorte, lorsque le capot est ouvert, on peut introduire ou retirer l'unité d'alimentation électrique à travers l'ouverture du compartiment de réception, et le compartiment de réception peut être fermé et protégé même en l'absence de l'unité d'alimentation électrique.

Toutefois, en position ouverte du capot à charnière, qu'il soit indépendant ou non de l'unité d'alimentation électrique, il existe un très fort risque d'endommager la charnière car le capot, de forme allongée, constitue un bras de levier relativement long et susceptible de provoquer un stress important dans la charnière, même dans le cas d'une sollicitation mécanique peu violente sur le capot. Dans les dispositifs à charnière mentionnés ci-dessus, aucun moyen n'est prévu pour empêcher la dégradation de la charnière.

Il existe alors un besoin d'empêcher que la charnière soit dégradée ou détruite lors des sollicitations mécaniques habituellement appliquées au capot pendant les utilisations normales.

Simultanément, il existe un besoin d'assurer une fermeture étanche du compartiment de réception, évitant les intrusions de liquides tant pendant la présence de l'unité d'alimentation électrique sur le véhicule que pendant son absence.

### EXPOSE DE L'INVENTION

Un problème proposé par la présente invention est de concevoir un capot de fermeture et de protection pour unité d'alimentation électrique embarquée et amovible, dans lequel le capot est retenu en permanence sur le véhicule par une charnière autorisant l'ouverture et la fermeture d'un compartiment de réception pour l'unité d'alimentation électrique, et dans lequel des moyens de protection permettent d'empêcher la dégradation ou la rupture de la charnière lors de sollicitations mécaniques excessives appliquées sur le capot en position ouverte.

Un autre problème proposé par la présente invention est de concevoir un tel capot de fermeture et de protection pour unité d'alimentation électrique embarquée qui, en position fermée, assure une bonne étanchéité du compartiment de réception afin d'empêcher l'intrusion de liquides.

Pour atteindre ces objets ainsi que d'autres, selon un premier aspect, l'invention propose un véhicule ayant un compartiment de réception conformé pour recevoir et contenir une unité d'alimentation électrique amovible, le compartiment de réception comprenant :
- une ouverture conformée pour autoriser l'introduction de l'unité d'alimentation électrique dans le compartiment de réception et son extraction hors du compartiment de réception,
- un capot, mobile entre une position de fermeture dans laquelle il occulte ladite ouverture et une position escamotée dans laquelle il libère ladite ouverture pour autoriser l'introduction ou l'extraction de l'unité d'alimentation électrique à travers ladite ouverture,
- une charnière, comportant une partie fixe de charnière, solidaire du véhicule, et une partie mobile de charnière reliée au capot et montée rotative autour d'un axe de la partie fixe de charnière, la charnière reliant le capot au véhicule et autorisant le déplacement dudit capot par rotation entre sa position de fermeture et sa position escamotée ;
en outre, selon l'invention :
- la partie mobile de charnière est reliée au capot par des moyens de liaison mécanique débrayable et des moyens de butée de retenue,
- les moyens de liaison mécanique débrayable sont conformés pour assurer une liaison fixe entre le capot et la partie mobile de charnière en l'absence de sollicitations mécaniques forçant le capot à l'écart de la partie mobile de charnière selon une intensité supérieure à un seuil de déclenchement prédéterminé,
- les moyens de liaison mécanique débrayable sont conformés pour permettre un déplacement supplémentaire du capot vis-à-vis de la partie mobile de charnière en présence d'au moins une sollicitation mécanique forçant le capot à l'écart de la partie mobile de charnière selon une intensité supérieure audit seuil de déclenchement prédéterminé,
- les moyens de liaison mécanique débrayable sont conformés pour permettre de relier à nouveau de façon fixe le capot à la partie mobile de charnière par rapprochement du capot et de la partie mobile de charnière l'un contre l'autre,
- les moyens de butée de retenue sont conformés pour s'opposer audit déplacement supplémentaire du capot vis-à-vis de la partie mobile de charnière au-delà d'une course d'écartement prédéterminée et pour autoriser une oscillation limitée du capot vis à vis de la partie mobile de charnière, après un débrayage des moyens de liaison mécanique débrayable.

Les moyens de liaison mécanique débrayable permettent de limiter la contrainte mécanique subie par le capot et par la charnière. Une telle contrainte mécanique peut se produire par exemple lors d'une poussée mécanique extérieure exercée sur le capot dans le sens de son ouverture au-delà de sa position escamotée, ou lors d'une poussée mécanique extérieure exercée sur le capot dans un sens transversal par rapport à son plan de pivotement. Si cette poussée mécanique extérieure excède un seuil de déclenchement prédéterminé, le débrayage permet un déplacement supplémentaire du capot, qui supprime ou réduit sensiblement la résistance exercée par le capot et la charnière contre la poussée mécanique extérieure, ce qui supprime ou réduit sensiblement la contrainte mécanique subie par le capot et par la charnière.

Simultanément, après le débrayage, les moyens de butée de retenue évitent la chute du capot, de sorte que l'utilisateur peut ensuite ré-embrayer l'articulation lorsque la poussée mécanique extérieure a disparu.

En pratique, on peut prévoir un véhicule ayant un compartiment de réception conformé pour recevoir et contenir une unité d'alimentation électrique amovible, le compartiment de réception comprenant :
- une ouverture conformée pour autoriser l'introduction de l'unité d'alimentation électrique dans le compartiment de réception et son extraction hors du compartiment de réception,
- un capot, mobile entre une position de fermeture dans laquelle il occulte ladite ouverture et une position escamotée dans laquelle il libère ladite ouverture pour autoriser l'introduction ou l'extraction de l'unité d'alimentation électrique à travers ladite ouverture,
- une charnière, comportant une partie fixe de charnière, solidaire du véhicule, et une partie mobile de charnière reliée au capot et montée rotative autour d'un axe de la partie fixe de charnière, la charnière reliant le capot au véhicule et autorisant le déplacement dudit capot par rotation entre sa position de fermeture et sa position escamotée,
dans lequel la partie mobile de charnière est reliée au capot par des moyens de liaison mécanique débrayable et des moyens de butée de retenue, lesquels moyens comprenant :
- un bras de charnière, solidaire de la partie mobile de charnière, et se développant longitudinalement entre une première extrémité proximale et une seconde extrémité distale du bras de charnière,
- une rainure longitudinale, prévue sur une face interne du capot, et conformée pour recevoir ledit bras de charnière,
- une butée distale escamotable, conformée pour prendre sélectivement un état de retenue dans lequel elle retient dans ladite rainure longitudinale la seconde extrémité du bras de charnière, et un état de libération dans lequel elle libère la seconde extrémité du bras de charnière vis-à-vis de la rainure longitudinale,
- les moyens de butée de retenue étant conformés pour retenir la première extrémité du bras de charnière dans ladite rainure longitudinale lorsque la butée distale est en état de retenue, et conformés pour s'opposer à l'écartement de la première extrémité du bras de charnière vis-à-vis de ladite rainure longitudinale au-delà d'une course d'écartement prédéterminée et pour autoriser une oscillation limitée du capot vis-à-vis de la première extrémité du bras de charnière, lorsque la butée distale est en état de libération.

On réalise ainsi une structure particulièrement simple et fiable, capable de produire un débrayage certain et facilitant le ré-embrayage ultérieur.

Selon une réalisation pratique, on prévoit que :
- la butée distale escamotable comprend des moyens d'engagement axial entre la seconde extrémité du bras de charnière et l'extrémité distale correspondante de la rainure longitudinale,
- un premier moyen de rappel élastique, engagé entre le capot et le bras de charnière, sollicite en translation le capot vers la première extrémité du bras de charnière pour assurer l'interpénétration des moyens d'engagement axial entre eux.

Pour assurer une bonne capacité de débrayage lors d'une sollicitation mécanique transversale, on peut avantageusement prévoir que :
- la rainure longitudinale présente une section transversale en forme de trapèze, comportant une grande base constituant la face ouverte de rainure, et comportant une petite base constituant le fond de la rainure, les faces latérales étant obliques et orientées symétriquement de part et d'autre du fond de la rainure,
- le bras de charnière présente également une section transversale en forme de trapèze, et est conformé pour s'engager par complémentarité de formes dans la rainure longitudinale.

En pratique, les moyens d'engagement axial peuvent comprendre :
- une excroissance en forme de tête, dépassant axialement de l'une de la seconde extrémité du bras de charnière et de l'extrémité distale de la rainure longitudinale,
- un logement de retenue et des rampes de rappel, prévus en position frontale dans l'autre de la seconde extrémité du bras de charnière et de l'extrémité distale de la rainure longitudinale.

On peut avantageusement prévoir que :
- le logement de retenue est une cavité en forme de calotte sphérique à bord périphérique évasé dans laquelle la tête, de forme hémisphérique, pénètre selon une profondeur inférieure à son rayon,
- les rampes de rappel comprennent deux rampes frontales bordées par une rampe de rappel supérieure et une rampe de rappel inférieure,
- la rampe de rappel supérieure comprend un épaulement en saillie comportant un tronçon central concave, prolongeant longitudinalement le logement de retenue selon une distance au moins égale au rayon de la tête, et deux tronçons latéraux orientés obliquement à l'écart du logement de retenue jusqu'à des faces latérales obliques correspondantes du bras de charnière,
- la rampe de rappel inférieure comprend un épaulement en saillie comportant deux tronçons orientés obliquement en V vers le haut depuis le sommet inférieur du logement de retenue jusqu'aux dites faces latérales obliques correspondantes du bras de charnière,
- les rampes frontales sont inclinées en pente à l'écart du logement de retenue.

Dans un mode de réalisation avantageux, favorisant l'étanchéité du capot en position de fermeture, des moyens élastiques de retenue sont engagés entre le capot et la partie mobile de charnière, et sont agencés de façon à rapprocher en permanence le capot de la partie mobile de charnière et à plaquer ainsi le capot sur un bord périphérique de l'ouverture lorsque le capot est en position de fermeture.

Selon une possibilité, les moyens de rappel élastique permettent de réaliser un ré-embrayage ultérieur automatique dès la disparition de la poussée mécanique extérieure ayant provoqué un débrayage. De la sorte, l'utilisateur n'a pas à se préoccuper du capot pendant qu'il manipule l'unité d'alimentation électrique. On pourra toutefois préférer un ré-embrayage par poussée manuelle et guidage par des pentes.

De préférence, on prévoit un ressort de rappel de capot conformé pour solliciter en rotation la partie mobile de charnière vers la position escamotée du capot.

Pour faciliter la réalisation pratique du capot par moulage, ladite rainure longitudinale peut être réalisée dans un rail centreur rapporté et fixé en face intérieure du capot.

Les moyens de butée de retenue peuvent avantageusement comprendre :
- sur le rail centreur, ou directement sur le capot, deux ailerons latéraux opposés, deux ergots latéraux, et un ergot central cylindrique,
- sur le bras de charnière, deux ailes latérales opposées en regard des ailerons latéraux opposés et des ergots latéraux, et un logement cylindrique dans lequel est retenu avec un jeu latéral prédéfini l'ergot central cylindrique. Le jeu latéral permet à la fois ledit déplacement supplémentaire et ladite oscillation du capot après débrayage des moyens de liaison mécanique. Le jeu latéral étant limité, cela limite également ledit déplacement supplémentaire et ladite oscillation du capot.

Dans l'application de l'invention à une bicyclette notamment, une telle structure de charnière débrayable évite la dégradation du capot et de la charnière lors d'une poussée mécanique extérieure. On peut alors placer le compartiment de réception à l'intérieur d'une poutre formant une partie d'un cadre de bicyclette, sans que cela nuise à la fiabilité du capot. De préférence, l'ouverture est située sur la face supérieure de ladite poutre, pour faciliter sensiblement la manutention de l'unité d'alimentation électrique lors de son introduction dans le compartiment de réception et lors de son retrait pour une recharge à l'extérieur. La poutre peut être oblique.

Dans tous les cas d'application à un véhicule, on peut avantageusement prévoir que :
- la charnière relie une première extrémité du capot au véhicule selon une première extrémité de l'ouverture,
- des moyens de verrouillage de capot, actionnables par un utilisateur, sont agencés pour maintenir et verrouiller de façon réversible une seconde extrémité du capot au véhicule selon une seconde extrémité de l'ouverture,
- des moyens de verrouillage de batterie, actionnables par l'utilisateur, sont agencés pour maintenir et verrouiller de façon réversible une seconde extrémité de l'unité d'alimentation électrique dans le compartiment de réception au voisinage de la seconde extrémité de l'ouverture,
- les moyens de verrouillage de capot et les moyens de verrouillage de batterie sont reliés les uns aux autres par un levier commun de façon à fonctionner simultanément sous l'effet d'une sollicitation unique de l'utilisateur produisant le verrouillage et/ou le déverrouillage du capot et de l'unité d'alimentation électrique.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue de côté d'une bicyclette comportant un dispositif selon l'invention, le capot étant en position escamotée ;
[Fig.2] La figure 2 est une vue schématique de côté en coupe, illustrant les organes essentiels de l'articulation du capot selon un premier mode de réalisation de la présente invention, le capot étant en position de fermeture ;
[Fig.3] La figure 3 est une vue schématique de côté en coupe, illustrant les organes essentiels de l'articulation du capot selon le mode de réalisation de la figure 2, le capot étant en position de fermeture, dans le cas où l'axe de rotation du capot est plus éloigné ;
[Fig.4] La figure 4 est une vue en perspective de dessus, illustrant une partie mobile de charnière et le bras de charnière selon un second mode de réalisation de l'invention ;
[Fig.5] La figure 5 est une vue en perspective de dessous, illustrant la partie mobile de charnière et le bras de charnière selon le mode de réalisation de la figure 4, avec un détail à plus grande échelle de la seconde extrémité du bras de charnière montrant le logement de retenue de la butée distale ;
[Fig.6] La figure 6 est une vue en perspective de dessus, illustrant un rail centreur pouvant constituer la rainure longitudinale du capot recevant la partie mobile de charnière et le bras de charnière selon le mode de réalisation de la figure 4;
[Fig.7] La figure 7 est une vue en perspective de dessous, illustrant le rail centreur de la figure 6 ;
[Fig.8] La figure 8 est une autre vue en perspective de dessous, illustrant le rail centreur de la figure 6, avec un détail à plus grande échelle de l'extrémité distale du rail centreur montrant la tête de la butée distale ;
[Fig.9] La figure 9 est une vue en perspective de dessous illustrant le capot recevant sur sa face intérieure le rail centreur formant la rainure dans laquelle est engagé le bras de charnière, avec un détail à plus grande échelle de la partie charnière ;
[Fig. 10] La figure 10 est une vue partielle de côté en coupe illustrant un détail des moyens de butée de retenue ;
[Fig.11] La figure 11 est une vue partielle de côté en coupe illustrant à plus grande échelle un ressort de butée des moyens de butée de retenue ;
[Fig.12] La figure 12 est une vue de côté en coupe d'un tronçon de poutre de cadre de bicyclette incorporant un compartiment de réception contenant une unité d'alimentation électrique, avec un couvercle articulé par une charnière et des moyens de verrouillage selon un mode de réalisation de l'invention, l'ensemble étant en position fermée et verrouillée ;
[Fig. 13] La figure 13 est une vue de côté en coupe illustrant l'ensemble de la figure 12 lorsque le capot est en position escamotée, non débrayée ; et
[Fig.14] La figure 14 est une vue de côté en coupe illustrant l'ensemble de la figure 12 lorsque le capot est en position escamotée et débrayée.

### DESCRIPTION DES MODES DE REALISATION PREFERES

Lorsque des références numériques identiques sont utilisées dans plusieurs figures, modes de réalisation ou variantes de l'invention, ces références numériques désignent des éléments identiques ou similaires dans chacun(e) des figures, modes de réalisation ou variantes.

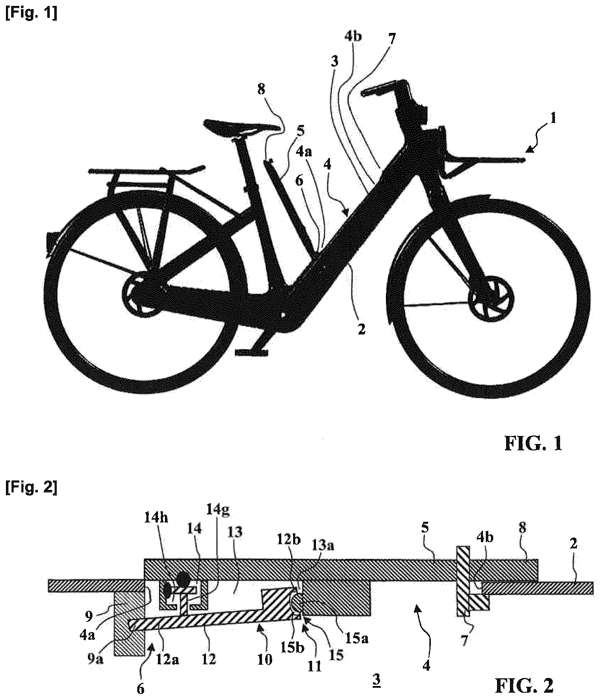

On considère tout d'abord la figure 1 qui illustre un véhicule selon la présente invention, dans un mode de réalisation de type bicyclette.

Dans ce mode de réalisation, la bicyclette 1 comporte un cadre avec une poutre centrale oblique ascendante 2 dans laquelle est ménagé un compartiment de réception 3 ayant une ouverture 4 située sur la face supérieure de ladite poutre 2. L'ouverture 4 est conformée pour autoriser l'introduction d'une unité d'alimentation électrique dans le compartiment de réception 3 et son extraction hors du compartiment de réception 3.

Un capot 5 permet d'occulter l'ouverture 4 dans une position de fermeture, et permet de donner l'accès à l'ouverture 4 dans une position escamotée telle qu'illustrée sur la figure 1. Pour cela, le capot 5 est articulé sur la poutre 2 par une charnière 6 à l'extrémité inférieure 4a de l'ouverture 4.

Dans sa position de fermeture, le capot 5 est rabattu sur la face supérieure de la poutre 2, et des moyens de verrouillage de capot 7 sont agencés à l'extrémité supérieure 4b de l'ouverture 4 pour maintenir et verrouiller de façon réversible l'extrémité libre 8 du capot 5.

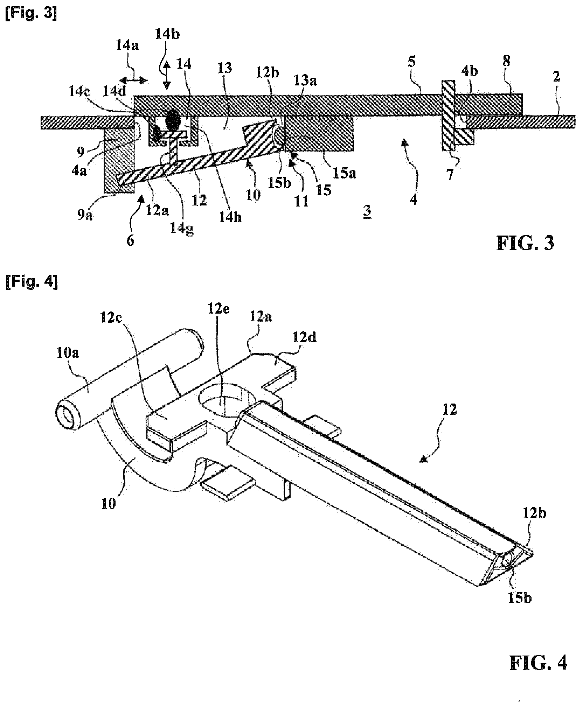

On considère maintenant les figures 2 et 3, qui illustrent de façon schématique de côté en coupe les organes essentiels d'une articulation du capot 5 sur la poutre 2. Le capot 5 est illustré en position de fermeture.

On retrouve la poutre 2, l'ouverture 4 et ses extrémités inférieure 4a et supérieure 4b, le capot 5 et son extrémité libre 8, les moyens de verrouillage de capot 7, et la charnière 6.

La charnière 6 comprend d'une part une partie fixe de charnière 9, solidaire du véhicule, c'est-à-dire dans le cas présent solidaire de la poutre 2, et comportant un axe de rotation fixe 9a. La charnière 6 comprend d'autre part une partie mobile de charnière 10 reliée au capot 5 et montée rotative autour de l'axe de rotation fixe 9a de la partie fixe de charnière 9. La charnière 6 est conformée de façon à autoriser le déplacement du capot 5 par rotation entre sa position de fermeture illustrée sur les figures 2 et 3 et sa position escamotée illustrée sur la figure 1.

La partie mobile de charnière 10 est reliée au capot 5 par des moyens de liaison mécanique débrayable 11. Dans leur état illustré sur les figures 2 et 3, les moyens de liaison mécanique débrayable 11 ne sont pas débrayés, et assurent une liaison mécanique fixe entre le capot 5 et la partie mobile de charnière 10. Cet état non débrayé est conservé tant qu'une sollicitation mécanique forçant le capot 5 à l'écart de la partie mobile de charnière 10 reste inférieure à un seuil de déclenchement prédéterminé.

Dans le détail du mode de réalisation illustré sur les figures 2 et 3, les moyens de liaison mécanique débrayable comprennent un bras de charnière 12, solidaire de la partie mobile de charnière 10, et se développant longitudinalement entre une première extrémité proximale 12a et une seconde extrémité distale 12b du bras de charnière 12. Une rainure longitudinale 13 est prévue sur une face interne du capot 5, et est conformée pour recevoir et retenir sélectivement ledit bras de charnière 12.

Pour retenir le bras de charnière 12 dans la rainure longitudinale 13 du capot 5, on prévoit des moyens de butée de retenue 14 conformés pour retenir la première extrémité 12a du bras de charnière 12 dans ladite rainure longitudinale 13, et on prévoit une butée distale escamotable 15 conformée pour prendre sélectivement un état de retenue dans lequel elle retient dans ladite rainure longitudinale 13 la seconde extrémité 12b du bras de charnière 12, et un état de libération dans lequel elle libère la seconde extrémité 12b du bras de charnière 12 vis-à-vis de la rainure longitudinale 13.

Dans le mode de réalisation illustré sur les figures 2 et 3, les moyens de butée de retenue 14 sont agencés de manière à autoriser un léger mouvement relatif entre le capot 5 et le bras de charnière 12, notamment en translation 14a le long du bras de charnière 12, ainsi qu'en translation 14b vers et à l'écart du bras de charnière 12. On voit sur les figures que les moyens de butée de retenue 14 sont agencés de façon à limiter les mouvements relatifs de translation 14a et 14b. Un premier moyen de rappel élastique 14c est engagé entre le capot 5 et le bras de charnière 12, et sollicite selon la translation 14a le capot 5 vers la première extrémité 12a du bras de charnière 12. Des moyens élastiques de retenue 14d sont engagés entre le capot 5 et le bras de charnière 12, et sollicitent le capot 5 selon la translation 14b en direction du bras de charnière 12, de façon à plaquer le capot 5 sur un bord périphérique de l'ouverture 4 lorsque le capot 5 est en position de fermeture.

En pratique, dans le mode de réalisation illustré sur les figures 2 et 3, les moyens de butée de retenue 14 comprennent une tige 14g solidaire du bras de charnière 12, qui pénètre dans un logement 14h solidaire du capot 5 et qui se termine par une tête emprisonnée de façon lâche dans ledit logement 14h. Un débattement possible de la tête dans le logement 14h permet les translations 14a et 14b ainsi que des rotations relatives du capot 5 vis-à-vis du bras de charnière 12, tout en limitant lesdites translations 14a et 14b et lesdites rotations. Les mêmes effets peuvent être obtenus en prévoyant une tige 14g solidaire du capot 5 et qui se termine par une tête emprisonnée de façon lâche dans un logement 14h solidaire du bras de charnière 12.

Dans le mode de réalisation illustré sur les figures 2 et 3, la butée distale escamotable 15 comprend des moyens d'engagement axial entre la seconde extrémité 12b du bras de charnière 12 et l'extrémité distale correspondante 13a de la rainure longitudinale 13. Dans ce mode de réalisation, les moyens d'engagement axial comprennent une excroissance en forme de tête 15a, dépassant axialement vers l'intérieur depuis l'extrémité 13a de la rainure longitudinale 13, et un logement de retenue 15b prévu en face frontale de la seconde extrémité 12b du bras de charnière 12. Le logement de retenue 15b est une cavité en forme de calotte sphérique à bord périphérique évasé dans laquelle la tête 15a, de forme hémisphérique, pénètre selon une profondeur inférieure à son rayon. De la sorte, un effort transversal appliqué sur le capot 5 peut faire sortir la tête 15a hors du logement de retenue 15b, débrayant ainsi la liaison mécanique 11, grâce à la possibilité de déplacement selon la translation 14a du capot 5 par rapport au bras de charnière 12, lorsque cet effort transversal est suffisant pour contrer l'effort de retenue exercé par le premier moyen de rappel élastique 14c.

Lorsque la liaison mécanique 11 est débrayée, c'est-à-dire lorsque la butée distale escamotable 15 libère le capot 5 vis-à-vis de l'extrémité distale 12b du bras de charnière 12, le capot 5 reste lié à la première extrémité 12a du bras de charnière 12 par les moyens de butée de retenue 14, lesquels autorisent des translations limitées 14a et 14b ainsi que des rotations relatives limitées du capot 5 vis-à-vis du bras de charnière 12.

Lorsque la liaison mécanique 11 est embrayée, c'est-à-dire lorsque la butée distale escamotable 15 retient le capot 5 vis-à-vis de l'extrémité distale 12b du bras de charnière 12, et lorsque le capot 5 est en position de fermeture telle qu'illustrée sur les figures 2 et 3, les moyens élastiques de retenue 14d plaquent le capot 5 sur un bord périphérique de l'ouverture 4, garantissant une bonne étanchéité s'opposant à la pénétration d'eau par la partie inférieure de l'ouverture 4. Simultanément, grâce à la capacité de translation 14b et à l'élasticité des moyens élastiques de retenue 14d, les moyens de butée de retenue 14 autorisent le maintien d'une bonne étanchéité quelle que soit la position relative de l'axe de rotation 9a vis-à-vis de la surface de la poutre 2 dans une plage de positions possibles. Autrement dit, ces moyens de butée de retenue 14 permettent de rattraper d'éventuelles dispersions de cotes pouvant se produire lors de la fabrication du véhicule, et illustrées par la différence de positions de l'axe de rotation 9a entre les figures 2 et 3.

Les figures suivantes illustrent le dispositif de l'invention selon le second mode de réalisation.

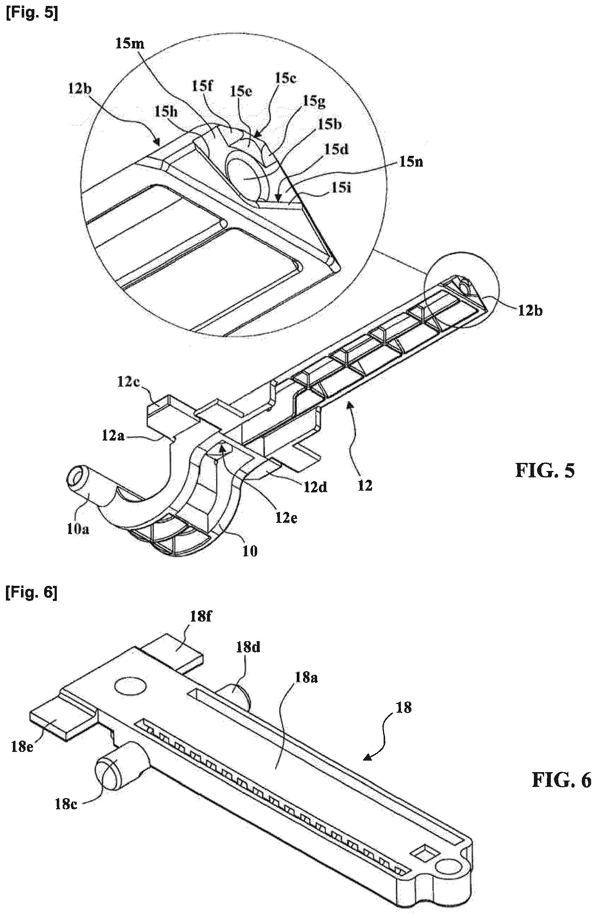

Les figures 4 et 5 illustrent en perspective une structure de bras de charnière 12 selon ce second mode de réalisation de l'invention. Ce bras de charnière 12 est solidaire d'une partie mobile de charnière 10 comportant un tube transversal 10a monté pivotant autour de l'axe de rotation fixe 9a d'une partie fixe de charnière non représentée sur ces figures. Le bras de charnière 12 présente une section transversale en forme de trapèze, ayant des faces latérales inclinées à 45° environ, pour faciliter son introduction, sa tenue et son guidage dans la rainure longitudinale 13 du capot 5. L'extrémité proximale 12a du bras de charnière 12 comporte deux ailes latérales 12c et 12d en saillie, ainsi qu'un logement cylindrique 12e ayant son axe perpendiculaire au bras de charnière 12 et au tube transversal 10a.

Sur la figure 5, on distingue le détail de la face frontale de la seconde extrémité 12b du bras de charnière 12, comprenant le logement de retenue 15b central en forme de calotte sphérique entre deux rampes frontales 15m et 15n bordées par une rampe de rappel supérieure 15c et une rampe de rappel inférieure 15d. La rampe de rappel supérieure 15c comporte un tronçon central concave 15e, prolongeant axialement le logement de retenue 15b selon une distance au moins égale au rayon de la tête 15a, et deux tronçons latéraux 15f et 15g orientés obliquement à l'écart du logement de retenue 15b jusqu'à des faces latérales obliques correspondantes du bras de charnière 12. La rampe de rappel inférieure 15d est un épaulement en saillie comportant deux tronçons obliques 15h et 15i orientés obliquement en V vers le haut depuis le sommet inférieur du logement de retenue 15b jusqu'aux dites faces latérales obliques correspondantes du bras de charnière 12.

Depuis le logement de retenue 15b, le tronçon latéral 15f s'écarte progressivement du tronçon oblique 15h, et le tronçon latéral 15g s'écarte progressivement du tronçon oblique 15i. Les rampes frontales 15m et 15n sont inclinées en pente à l'écart du logement de retenue 15b pour favoriser la réintroduction de la tête 15a dans le logement de retenue 15b après un débrayage.

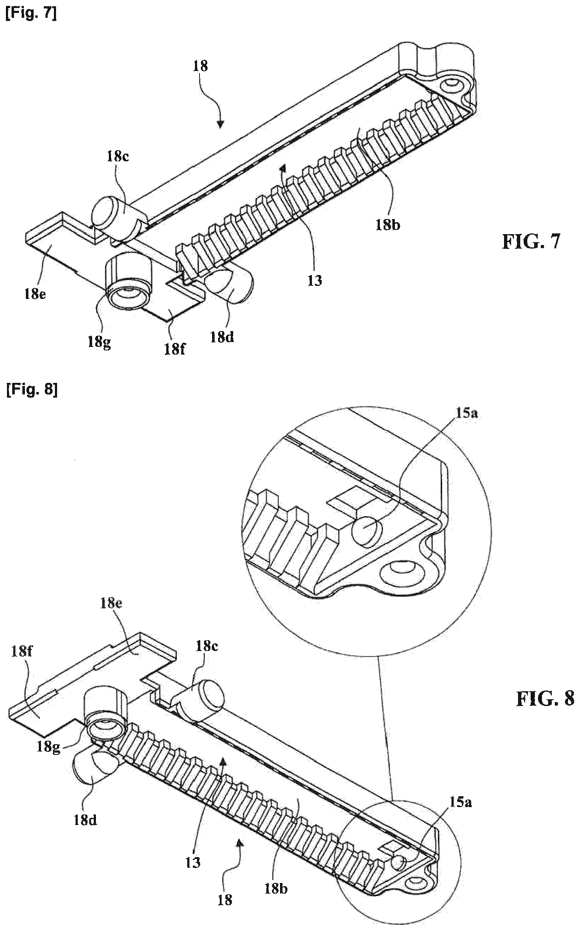

Comme illustré précédemment, la rainure longitudinale 13 peut être réalisée dans le capot 5 lui-même. Selon une alternative avantageuse, illustrée sur les figures 6 à 8, pour faciliter la fabrication du dispositif, on peut prévoir un rail centreur 18, destiné à être rapporté et fixé en face intérieure du capot 5, et conformé pour réaliser la rainure longitudinale 13. La figure 6 montre la face supérieure 18a, destinée à être fixée sous la face intérieure du capot 5. Les figures 7 et 8 montrent la face inférieure 18b destinée à faire face au compartiment de réception 3, et conformée pour constituer la rainure longitudinale 13. Le tronçon proximal du rail centreur 18 comprend deux ergots latéraux 18c et 18d, deux ailerons latéraux 18e et 18f, et un ergot central cylindrique 18g perpendiculaire.

Comme on le voit sur les figures 7 et 8, la rainure longitudinale 13 présente une section transversale en forme de trapèze, comportant une grande base constituant la face ouverte de la rainure, et comportant une petite base constituant le fond de la rainure, les faces latérales obliques étant orientées symétriquement de part et d'autre du fond de la rainure. Considérant à nouveau les figures 4 et 5, on voit que le bras de charnière 12 présente également une section transversale en forme de trapèze, et qu'il est conformé pour s'engager par complémentarité de formes dans la rainure longitudinale 13 du capot 5 ou du rail centreur 18.

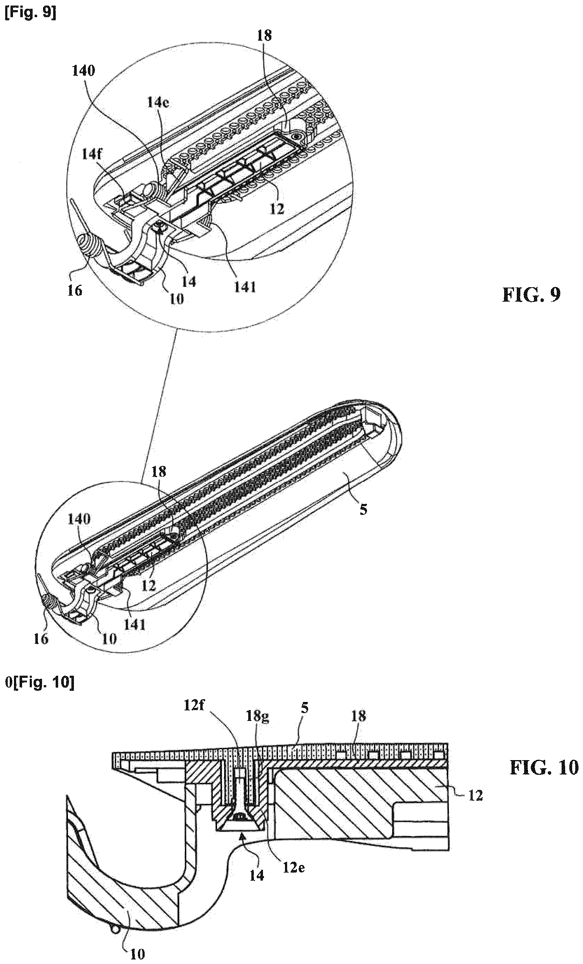

On considère maintenant la figure 9, illustrant la face intérieure du capot 5, sur laquelle est rapporté le rail centreur 18 retenant le bras de charnière 12 et la partie mobile de charnière 10. Dans ce mode de réalisation, deux ressorts de butée 140 et 141 parallèles réalisent chacun le premier moyen de rappel élastique 14c et les moyens élastiques de retenue 14d précédemment illustrés sur la figure 3. Chacun des ressorts de butée 140 et 141 comprend une partie centrale enroulée en hélice autour d'un ergot latéral 18c ou 18d du rail centreur 18, et deux pattes obliques telles que les pattes 14e et 14f engagées respectivement contre le capot 5 et sous une aile latérale 12c ou 12d de la partie mobile de charnière 10.

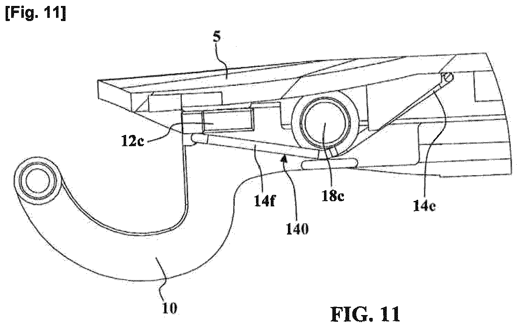

La figure 11 illustre à plus grande échelle, en vue de côté, la disposition du ressort de butée 140 autour de l'ergot 18c, avec les pattes obliques 14e et 14f. La patte oblique 14f est en appui sous l'aile latérale 12c, de sorte que le ressort 140 sollicite le capot 5 vers le bas.

Sur la figure 9, on distingue en outre la présence d'un ressort de rappel de capot 16, engagé entre la partie mobile de charnière 10 et la poutre 2, et agencé pour solliciter en permanence le capot 5 en rotation autour de son axe 9a vers sa position escamotée. De la sorte, le ressort de rappel de capot 16 facilite l'ouverture du capot 5, puis contraint et retient le capot 5 au moins dans sa position escamotée.

La figure 10 illustre en vue de côté en coupe médiane l'ergot central cylindrique 18g solidaire du capot 5 et engagé avec un jeu prédéfini dans le logement cylindrique 12e solidaire du bras de charnière 12 et retenu dans ce logement par une vis 12f. Les mêmes effets peuvent être obtenus en prévoyant un ergot cylindrique 18g solidaire du bras de charnière 12 et retenu avec jeu dans un logement 12e solidaire du capot 5.

Après un débrayage, les ailes latérales 12c et 12d, les ailerons latéraux 18e et 18f, les ergots latéraux 18c et 18d, ainsi que l'ergot cylindrique 18g retenu avec jeu dans son logement 12e par la vis 12f, participent pour limiter les mouvements du capot 5 à l'écart du bras de charnière 12, remplissant ainsi la fonction de moyens de butée de retenue 14.

En pratique, les ailes latérales 12c est 12d sont agencées pour venir le cas échéant en appui contre les ailerons latéraux 18e et 18f, et l'ergot central 18g est agencé pour venir le cas échéant en appui sur la paroi périphérique du logement 12e, pour limiter la rotation supplémentaire du capot 5 au-delà de sa rotation d'ouverture. D'autre part, les ergots latéraux 18c et 18d sont agencés pour venir le cas échéant buter contre les ailes latérales 12c est 12d, et l'ergot central 18g est agencé pour venir le cas échéant en appui sur la paroi périphérique du logement 12e, pour limiter un débattement latéral du capot 5.

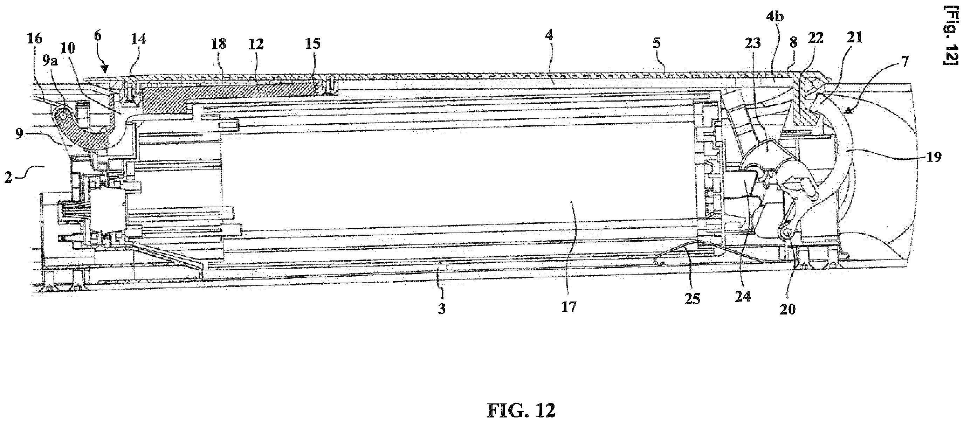

On considère maintenant les figures 12 à 14, qui illustrent, en vue générale de côté en coupe, le tronçon de poutre 2 qui comprend le compartiment de réception 3, l'ouverture supérieure 4, le capot 5 articulé selon la charnière 6 et dont l'extrémité libre 8 peut être retenue en position de fermeture par les moyens de verrouillage de capot 7. Sur ces figures, on a représenté une unité d'alimentation électrique 17 logée dans le compartiment de réception 3.

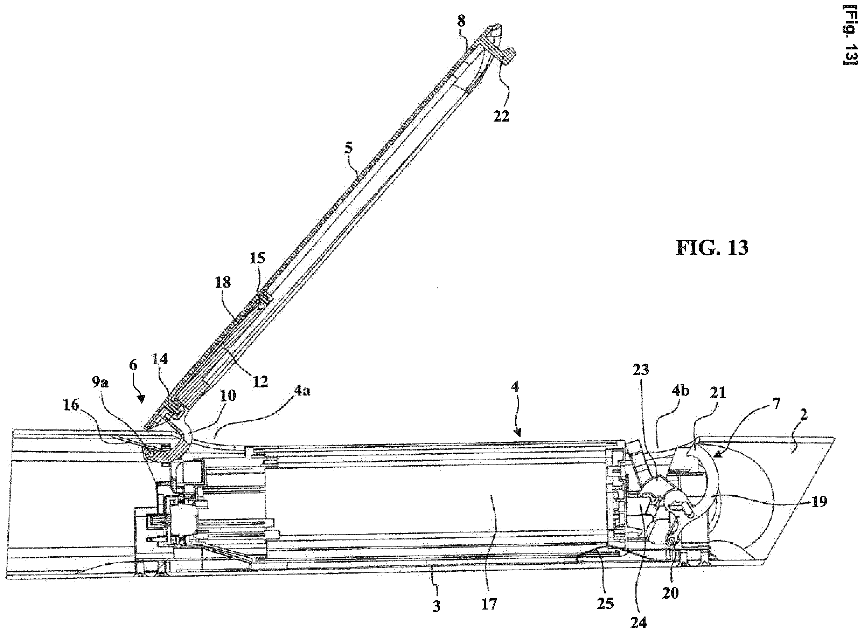

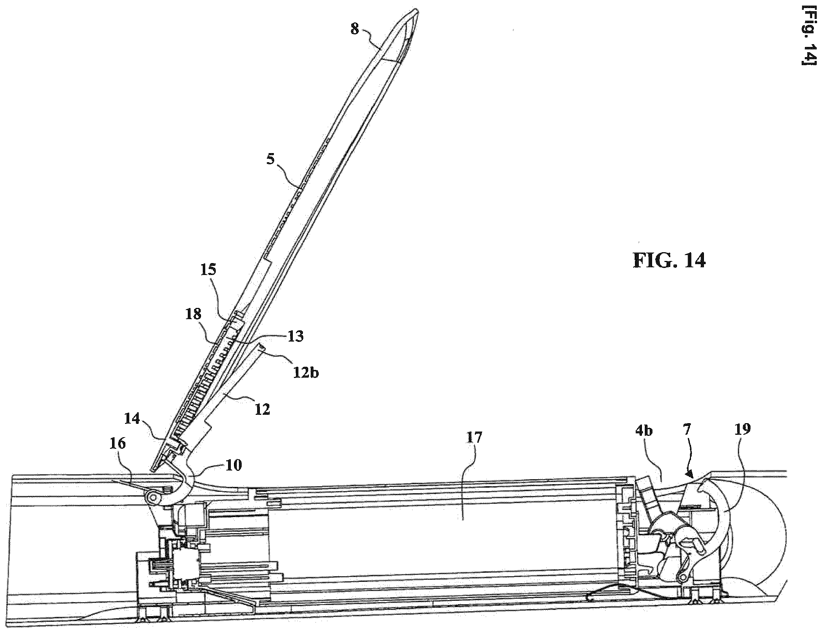

Sur la figure 12, le capot 5 est en position fermée, plaqué de façon étanche sur le pourtour de l'ouverture 4. Sur la figure 13, le capot 5 est en position escamotée, laissant l'accès au compartiment de réception 3 par l'ouverture supérieure 4, le capot 5 restant fixé de façon rigide à la partie mobile de charnière 10 par le fait que la butée distale 15 n'est pas déverrouillée. Sur la figure 14, le capot 5 est en position escamotée, mais la butée distale 15 est en position de libération, la seconde extrémité 12b du bras de charnière 12 étant libérée vis-à-vis du capot 5. Dans cette position, le capot 5 reste retenu vis-à-vis de la partie mobile de charnière 10 par les moyens de butée de retenue 14, lesquels autorisent des mouvements limités de translation et de rotation du capot 5 vis-à-vis de la partie mobile de charnière 10.

Sur ces mêmes figures 12 à 14, on considère maintenant plus spécialement les moyens de verrouillage de capot 7. Ces moyens de verrouillage de capot 7 sont agencés pour maintenir et verrouiller de façon réversible la seconde extrémité 8 du capot 5 sur la poutre 2 selon la seconde extrémité 4b de l'ouverture 4.

Dans le mode de réalisation illustré, ces moyens de verrouillage de capot 7 comprennent un levier 19, montée rotatif autour d'un axe transversal fixe 20 de la poutre 2 entre une position de verrouillage illustrée sur la figure 12 et une position de libération illustrée sur les figures 13 et 14. Le levier 19 comprend un bec distal d'accrochage de capot 21. En position de verrouillage du levier 19, le bec distal d'accrochage de capot 21 coopère avec une excroissance de capot 22, lorsque le capot 5 est en position de fermeture, pour tenir l'extrémité libre 8 du capot plaquée de façon étanche contre un rebord périphérique de l'ouverture 4. En position de libération du levier 19, le bec distal d'accrochage de capot 21 reste à l'écart de l'excroissance de capot 22, autorisant le libre pivotement du capot 5, lequel pivote vers sa position escamotée sous l'action du ressort de rappel de capot 16.

Dans le mode de réalisation illustré, le levier 19 comprend un bec proximal d'accrochage de batterie 23. En position de verrouillage du levier 19, le bec proximal d'accrochage de batterie 23 coopère avec une excroissance de batterie 24, lorsque l'unité d'alimentation électrique 17 est engagée dans le fond du compartiment de réception 3, pour tenir l'unité d'alimentation électrique 17 plaquée contre le fond du compartiment de réception 3. En position de libération du levier 19, le bec proximal d'accrochage de batterie 23 reste à l'écart de l'excroissance de batterie 24, autorisant la manipulation de l'unité d'alimentation électrique 17 à travers l'ouverture 4 pour son introduction ou son retrait. Lors d'une rotation du levier 19 vers sa position de libération, l'unité d'alimentation électrique 17 est légèrement repoussée vers l'extérieur par un ressort de batterie 25, facilitant sa préhension.

Le levier 19 est actionnable en rotation par un utilisateur, pour le verrouillage et le déverrouillage. On comprend que, dans ce mode de réalisation, les moyens de verrouillage de capot 7 et les moyens de verrouillage de batterie 23 et 24 sont reliés les uns aux autres par le levier 19 commun de façon à fonctionner simultanément sous l'effet d'une sollicitation unique de l'utilisateur produisant le verrouillage et/ou le déverrouillage du capot 5 et de l'unité d'alimentation électrique 17.

La présente invention n'est pas limitée aux modes de réalisation qui ont été explicitement décrits, mais elle en inclut les diverses variantes et généralisations contenues dans le domaine des revendications ci-après.

## Revendications

1. Véhicule (1) ayant un compartiment de réception (3) conformé pour recevoir et contenir une unité d'alimentation électrique (17) amovible, le compartiment de réception (3) comprenant :
- une ouverture (4) conformée pour autoriser l'introduction de l'unité d'alimentation électrique (17) dans le compartiment de réception (3) et son extraction hors du compartiment de réception (3),
- un capot (5), mobile entre une position de fermeture dans laquelle il occulte ladite ouverture (4) et une position escamotée dans laquelle il libère ladite ouverture (4) pour autoriser l'introduction ou l'extraction de l'unité d'alimentation électrique (17) à travers ladite ouverture (4),
- une charnière (6), comportant une partie fixe de charnière (9), solidaire du véhicule (1), et une partie mobile de charnière (10) reliée au capot (5) et montée rotative autour d'un axe de rotation fixe (9a) de la partie fixe de charnière (9), la charnière (6) reliant le capot (5) au véhicule (1) et autorisant le déplacement dudit capot (5) par rotation entre sa position de fermeture et sa position escamotée,
**caractérisé en ce que** :
- la partie mobile de charnière (10) est reliée au capot (5) par des moyens de liaison mécanique débrayable (11) et des moyens de butée de retenue (14),
- les moyens de liaison mécanique débrayable (11) sont conformés pour assurer une liaison fixe entre le capot (5) et la partie mobile de charnière (10) en l'absence de sollicitations mécaniques forçant le capot (5) à l'écart de la partie mobile de charnière (10) selon une intensité supérieure à un seuil de déclenchement prédéterminé,
- les moyens de liaison mécanique débrayable (11) sont conformés pour permettre un déplacement supplémentaire du capot (5) vis-à-vis de la partie mobile de charnière (10) en présence d'au moins une sollicitation mécanique forçant le capot (5) à l'écart de la partie mobile de charnière (10) selon une intensité supérieure audit seuil de déclenchement prédéterminé,
- les moyens de liaison mécanique débrayable (11) sont conformés pour permettre de relier à nouveau de façon fixe le capot (5) à la partie mobile de charnière (10) par rapprochement du capot (5) et de la partie mobile de charnière (10) l'un contre l'autre,
- les moyens de butée de retenue (14) sont conformés pour s'opposer audit déplacement supplémentaire du capot (5) vis-à-vis de la partie mobile de charnière (10) au-delà d'une course d'écartement prédéterminée et pour autoriser une oscillation limitée du capot (5) vis-à-vis de la partie mobile de charnière (10), après un débrayage des moyens de liaison mécanique débrayable (11).

2. Véhicule (1) selon la revendication 1, **caractérisé en ce qu'**il comprend :
- un bras de charnière (12), solidaire de la partie mobile de charnière (10), et se développant longitudinalement entre une première extrémité proximale (12a) et une seconde extrémité distale (12b) du bras de charnière (12),
- une rainure longitudinale (13), prévue sur une face interne du capot (5), et conformée pour recevoir ledit bras de charnière (12),
- une butée distale (15) escamotable, conformée pour prendre sélectivement un état de retenue dans lequel elle retient dans ladite rainure longitudinale (13) la seconde extrémité (12b) du bras de charnière, et un état de libération dans lequel elle libère la seconde extrémité (12b) du bras de charnière (12) vis-à-vis de la rainure longitudinale (13),
- les moyens de butée de retenue (14) étant conformés pour retenir la première extrémité (12a) du bras de charnière (12) dans ladite rainure longitudinale (13) lorsque la butée distale (15) est en état de retenue, et conformés pour s'opposer à l'écartement de la première extrémité (12a) du bras de charnière (12) vis-à-vis de ladite rainure longitudinale (13) au-delà d'une course d'écartement prédéterminée et pour autoriser une oscillation limitée du capot (5) vis-à-vis de la première extrémité (12a) du bras de charnière (12), lorsque la butée distale (15) est en état de libération.

3. Véhicule (1) selon la revendication 2, **caractérisé en ce que** :
- la butée distale (15) escamotable comprend des moyens d'engagement axial (15a, 15b) entre la seconde extrémité (12b) du bras de charnière (12) et l'extrémité distale (13a) correspondante de la rainure longitudinale (13),
- un premier moyen de rappel élastique (14c), engagé entre le capot (5) et le bras de charnière (12), sollicite en translation le capot (5) vers la première extrémité (12a) du bras de charnière (12) pour assurer l'interpénétration des moyens d'engagement axial (15a, 15b) entre eux.

4. Véhicule (1) selon l'une des revendications 2 ou 3, **caractérisé en ce que** :
- la rainure longitudinale (13) présente une section transversale en forme de trapèze, comportant une grande base constituant la face ouverte de rainure, et comportant une petite base constituant le fond de la rainure, les faces latérales étant obliques et orientées symétriquement de part et d'autre du fond de la rainure,
- le bras de charnière (12) présente également une section transversale en forme de trapèze, et est conformé pour s'engager par complémentarité de formes dans la rainure longitudinale (13).

5. Véhicule (1) selon les revendications 3 ou 4, **caractérisé en ce que** les moyens d'engagement axial (15a, 15b) comprennent :
- une excroissance en forme de tête (15a), dépassant axialement de l'une de la seconde extrémité (12b) du bras de charnière (12) et de l'extrémité distale (13a) de la rainure longitudinale (13),
- un logement de retenue (15b) et des rampes de rappel (15c, 15d, 15m, 15n), prévus en position frontale dans l'autre de la seconde extrémité (12b) du bras de charnière (12) et de l'extrémité distale (13a) de la rainure longitudinale (13).

6. Véhicule (1) selon la revendication 5, **caractérisé en ce que** :
- le logement de retenue (15b) est une cavité en forme de calotte sphérique à bord périphérique évasé dans laquelle la tête (15a), de forme hémisphérique, pénètre selon une profondeur inférieure à son rayon,
- les rampes de rappel comprennent deux rampes frontales (15m, 15n) bordées par une rampe de rappel supérieure (15c), et une rampe de rappel inférieure (15d),
- la rampe de rappel supérieure (15c) comprend un épaulement en saillie comportant un tronçon central concave (15e), prolongeant longitudinalement le logement de retenue (15b) selon une distance au moins égale au rayon de la tête (15a), et deux tronçons latéraux (15f, 15g) orientés obliquement à l'écart du logement de retenue (15b) jusqu'à des faces latérales obliques correspondantes du bras de charnière(12),
- la rampe de rappel inférieure (15d) comprend un épaulement en saillie comportant deux tronçons (15h, 15i) orientés obliquement en V vers le haut depuis le sommet inférieur du logement de retenue (15b) jusqu'aux dites faces latérales obliques correspondantes du bras de charnière (12),
- les rampes frontales(15m, 15n) sont inclinées en pente à l'écart du logement de retenue (15b).

7. Véhicule (1) selon l'une quelconque des revendications 2 à 6, **caractérisé en ce que** des moyens élastiques de retenue (14d, 140, 141) sont engagés entre le capot (5) et la partie mobile de charnière (10), et sont agencés de façon à rapprocher en permanence le capot (5) de la partie mobile de charnière (10) et à plaquer ainsi le capot (5) sur un bord périphérique de l'ouverture (4) lorsque le capot (5) est en position de fermeture.

8. Véhicule (1) selon l'une quelconque des revendications 2 à 7, **caractérisé en ce qu'**il comprend un ressort de rappel de capot (16) conformé pour solliciter en rotation la partie mobile de charnière (10) vers la position escamotée du capot (5).

9. Véhicule (1) selon l'une quelconque des revendications 2 à 8, **caractérisé en ce que** ladite rainure longitudinale (13) est réalisée dans un rail centreur (18) rapporté et fixé en face intérieure du capot (5).

10. Véhicule (1) selon la revendication 9, **caractérisé en ce que** les moyens de butée de retenue (14) comprennent :
- sur le rail centreur (18), deux ailerons latéraux opposés (18e, 18f), deux ergots latéraux (18c, 18d), et un ergot central cylindrique (18g),
- sur le bras de charnière (12), deux ailes latérales opposées (12c, 12d) en regard des ailerons latéraux opposés (18e, 18f) et des ergots latéraux (18c, 18d), et un logement cylindrique (12e) dans lequel est retenu avec un jeu latéral prédéfini l'ergot central cylindrique (18g).

11. Véhicule (1) selon l'une quelconque des revendications 1 à 10, **caractérisé en ce que** le compartiment de réception (3) est réalisé à l'intérieur d'une poutre (2) formant une partie d'un cadre de bicyclette, et l'ouverture (4) est située sur la face supérieure de ladite poutre (2).

12. Véhicule (1) selon l'une quelconque des revendications 1 à 11, **caractérisé en ce que** :
- la charnière (6) relie une première extrémité du capot (5) au véhicule (1) selon une première extrémité (4a) de l'ouverture (4),
- des moyens de verrouillage de capot (7), actionnables par un utilisateur, sont agencés pour maintenir et verrouiller de façon réversible une seconde extrémité libre (8) du capot (5) au véhicule (1) selon une seconde extrémité (4b) de l'ouverture (4),
- des moyens de verrouillage de batterie (23, 24), actionnables par l'utilisateur, sont agencés pour maintenir et verrouiller de façon réversible une seconde extrémité de l'unité d'alimentation électrique (17) dans le compartiment de réception (3) au voisinage de la seconde extrémité (4b) de l'ouverture (4),
- les moyens de verrouillage de capot (7) et les moyens de verrouillage de batterie (23, 24) sont reliés les uns aux autres par un levier (19) commun de façon à fonctionner simultanément sous l'effet d'une sollicitation unique de l'utilisateur produisant le verrouillage et/ou le déverrouillage du capot (5) et de l'unité d'alimentation électrique (17).
